# EUROPÄISCHE PATENTSCHRIFT

(11) **EP 3 303 799 B1**
(45) Veröffentlichungstag und Bekanntmachung des Hinweises auf die Patenterteilung: **07.07.2021**
(21) Anmeldenummer: 16723683.5
(22) Anmeldetag: 03.05.2016
(51) Int. Cl.: F02D 41/00, F02D 41/06, F02B 37/10, F02B 37/16, F02B 39/10, F02D 23/00, F02M 26/08

(54) **VERFAHREN UND STEUERVORRICHTUNG ZUM BETREIBEN EINER ANTRIEBSVORRICHTUNG**
METHOD AND CONTROL DEVICE FOR OPERATING A DRIVE DEVICE
PROCÉDÉ ET DISPOSITIF DE COMMANDE POUR FAIRE FONCTIONNER UN DISPOSITIF D'ENTRAÎNEMENT

(30) Priorität: 01.06.2015 DE 102015210079
(43) Veröffentlichungstag der Anmeldung: 11.04.2018
(73) Patentinhaber: Volkswagen Aktiengesellschaft, 38440 Wolfsburg (DE)
(72) Erfinder: REBOHL, Thorsten, 38527 Meine (DE); CASSEBAUM, Oliver, 38448 Wolfsburg (DE)
(74) Vertreter: MFG Patentanwälte Meyer-Wildhagen Meggle-Freund Gerhard PartG mbB
(86) Internationale Anmeldenummer: PCT/EP2016/059846
(87) Internationale Veröffentlichungsnummer: WO 2016/192914

(56) Entgegenhaltungen:
- DE-A1- 10 306 586
- GB-A- 2 490 943
- JP-A- 2008 095 669
- JP-A- 2008 255 940
- JP-A- 2015 001 195
- US-A1- 2004 206 083
- US-A1- 2015 083 092
- US-B1- 6 233 935

## Beschreibung

Die Erfindung betrifft ein Verfahren und eine Steuervorrichtung zum Betreiben einer Antriebsvorrichtung mit einer Verbrennungskraftmaschine, beispielsweise einer Antriebsvorrichtung eines Kraftfahrzeugs. Die Erfindung betrifft insbesondere ein Verfahren und eine Steuervorrichtung zum Betreiben der Antriebsvorrichtung vor dem Starten der Verbrennungskraftmaschine.

Verbrennungsmotoren mit Abgasturbolader ohne elektrischer Aufladeunterstützung bauen einen Ladedruck langsam in Abhängigkeit einer vorhandenen Abgasenthalpie auf. Die Abgasenthalpie wird von einem Massenstrom durch den Verbrennungsmotor und von einer eingespritzten Kraftstoffmasse beeinflusst. Die maximal eingespritzte Kraftstoffmasse ist abhängig von einer Motorfüllung, die wiederum u.a. von dem Ladedruck abhängt.

Um schnell auf Lastanforderungen reagieren zu können, ist es notwendig, den Ladedruck schnell anzupassen, um so die maximal eingespritzte Kraftstoffmasse zu erhöhen. Dazu werden oftmals elektrisch betriebene Verdichter eingesetzt, beispielsweise elektrische Zusatzverdichter oder elektrisch unterstützte Abgasturbolader. Die DE 101 64 789 A1 beschreibt beispielhaft ein Motorbetriebsverfahren während des Betriebs eines Verbrennungsmotors, wobei ein Verdichter voraktiviert wird, wenn eine Lastreduzierung oder eine Lastanforderung erkannt wird.

Auch beim Motorstart ist zunächst nur ein geringer Ladedruck vorhanden. Kommt es dann zu einer plötzlichen Momentenanforderung durch einen Fahrer, muss der Ladedruck erst langsam aufgebaut werden, so dass sich ein angefordertes Moment nur langsam einstellt. Insbesondere bei einem Motor-Start während des Fahrbetriebs wie nach einem Segeln mit Verbrennungsmotorstopp ist jedoch eine schnelle Beschleunigung wünschenswert.

Die DE 10 2014 203 928 A1 beschreibt ein Verfahren zum Betreiben eines Motors, wobei infolge einer Motorstartanfrage ein Druck im Zylinder durch einen elektrisch betriebenen Abgasturbolader erhöht wird. Da die Motorstartanfrage gleichzeitig den Start des Motors bewirkt, ist ein Momentenaufbau nach Motor(wieder)start trotz des Einsatzes des elektrisch betriebenen Abgasturboladers träge. Ein ähnliches Verfahren beschreibt auch die DE 103 06 586 A1.

Aufgabe der vorliegenden Erfindung ist es, ein Verfahren und eine Steuervorrichtung zum Betreiben einer Antriebsvorrichtung bereitzustellen, die die oben genannten Nachteile wenigstens teilweise überwinden.

Diese Aufgabe wird durch das erfindungsgemäße Verfahren zum Betreiben einer Antriebsvorrichtung nach Anspruch 1 und die erfindungsgemäße Steuervorrichtung zum Betreiben einer Antriebsvorrichtung nach Anspruch 9 gelöst.

Gemäß einem ersten Aspekt betrifft die vorliegende Erfindung ein Verfahren zum Betreiben einer Antriebsvorrichtung mit einer Verbrennungskraftmaschine, einem Luftzuführkanal zum Zuführen von Luft zur Verbrennungskraftmaschine und einer aktiv steuerbaren Verdichtungskomponente zum Beeinflussen eines Drucks im Luftzuführkanal, umfassend: Ermitteln bei abgeschalteter Verbrennungskraftmaschine, ob ein Starterwartungsereignis vorliegt, infolge dessen ein Start der Verbrennungskraftmaschine erfolgen kann; und,
wenn ein Starterwartungsereignis vorliegt:
Leiten eines Massenstroms durch einen Abschnitt des Luftzuführkanals, bevor die abgeschaltete Verbrennungskraftmaschine gestartet wird; und
Aktivieren der Verdichtungskomponente.

Gemäß einem zweiten Aspekt betrifft die vorliegende Erfindung eine Steuervorrichtung zum Betreiben einer Antriebsvorrichtung mit einer Verbrennungskraftmaschine, einem Luftzuführkanal zum Zuführen von Luft zur Verbrennungskraftmaschine und einer aktiv steuerbaren Verdichtungskomponente zum Beeinflussen eines Drucks im Luftzuführkanal, wobei die Steuervorrichtung dazu ausgebildet ist, ein Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung. Die vorliegende Erfindung betrifft ein Verfahren zum Betreiben einer Antriebsvorrichtung, beispielsweise einer Antriebsvorrichtung eines Kraftfahrzeugs, die eine Verbrennungskraftmaschine, einen Luftzuführkanal zum Zuführen von Luft zur Verbrennungskraftmaschine und eine aktiv steuerbare Verdichtungskomponente zum Beeinflussen eines Drucks im Luftzuführkanal aufweist. Gemäß dem Verfahren wird bei abgeschalteter Verbrennungskraftmaschine ermittelt, ob ein Starterwartungsereignis vorliegt, infolge dessen ein Start der Verbrennungskraftmaschine erfolgen kann. Wenn ein Starterwartungsereignis vorliegt, wird vor dem Starten der abgeschalteten Verbrennungskraftmaschine, insbesondere vor einer Startanforderung, ein Massenstrom durch einen Abschnitt des Luftzuführkanals geleitet. Außerdem wird die Verdichtungskomponente aktiviert. Die Verdichtungskomponente kann, wenn ein Starterwartungsereignis vorliegt, vor dem Starten der abgeschalteten Verbrennungskraftmaschine aktiviert werden. Beispielsweise kann die Verdichtungskomponente vor, zeitgleich mit oder nach einer Startanforderung aktiviert werden.

Durch das erfindungsgemäße Verfahren kann die Verbrennungskraftmaschine mittels einer aktiv gesteuerten Aufladung der abgeschalteten Verbrennungskraftmaschine vor ihrem Start vorkonditioniert werden, so dass beim Start der abgeschalteten Verbrennungskraftmaschine bereits ein höherer Ladedruck vorhanden ist als ohne Vorkonditionierung. Dadurch lässt sich ein durch den Start der abgeschalteten Verbrennungskraftmaschine angeforderter Sollladedruck bzw. ein durch den Start angefordertes Moment schnell erzeugen.

Die Verbrennungskraftmaschine kann unter unterschiedlichen Bedingungen abgeschaltet sein. Beispielsweise ist die Verbrennungskraftmaschine abgeschaltet, wenn sie stillsteht. Die Verbrennungskraftmaschine kann stillstehen, wenn eine Zündung der Verbrennungskraftmaschine deaktiviert ist und die Verbrennungskraftmaschine kein Drehmoment liefert. Ein Fahrzeug mit einer so abgeschalteten Verbrennungskraftmaschine kann beispielsweise ein parkendes Fahrzeug sein. Die Verbrennungskraftmaschine steht still, wenn die Zündung aktiviert ist, die Verbrennungskraftmaschine aber kein Drehmoment liefert. Ein Fahrzeug mit einer so abgeschalteten Verbrennungskraftmaschine kann ein Fahrzeug sein, das kurzfristig anhält, beispielsweise aufgrund einer Verkehrslage. Alternativ kann die Verbrennungskraftmaschine auch abgeschaltet sein, wenn sie nicht still steht, aber eine Kraftstoffeinspritzung unterbleibt, beispielsweise eine Schubabschaltung vorliegt. Ein Fahrzeug mit einer so abgeschalteten Verbrennungskraftmaschine kann sich in einem Segelbetrieb mit Verbrennungskraftmaschinenstopp befinden. Im Segelbetrieb ist das Fahrzeug in Fahrt, d.h. das Fahrzeug rollt, und die abgeschaltete Verbrennungskraftmaschine ist von einem Antriebsstrang abgekoppelt.

Ist die Verbrennungskraftmaschine abgeschaltet, ist üblicherweise ein Massenstrom durch die Verbrennungskraftmaschine unterbrochen. Beispielsweise sind ein Einlassventil und ein Auslassventil geschlossen. Zudem kann eine Drosselklappe im Luftzuführkanal zum Zuführen von Luft zur Verbrennungskraftmaschine oder eine Abgasklappe zum Ausgeben von Abgas aus einem Abgaskanal geschlossen sein.

Ist die Verbrennungskraftmaschine abgeschaltet, kann auch ein Massenstrom durch eine Abgasrückführung (AGR) unterbrochen sein. Zum Beispiel können eine oder mehrere Klappen in der Abgasrückführung geschlossen sein. Beispielsweise können ein Abgasrückführventil in einem Hochdruckabgasrückführkanal und/oder ein Abgasrückführventil in einem Niederdruckabgasrückführkanal geschlossen sein. Die Abgasrückführventile können Standard-AGR-Ventile sein.

Das Starten der abgeschalteten Verbrennungskraftmaschine kann das Anfordern eines Betriebsmodus umfassen, in dem die Verbrennungskraftmaschine ein Drehmoment oder, wenn bereits ein geringes Drehmoment vorliegt, ein erhöhtes Drehmoment liefert.

Das Starterwartungsereignis kann ein Ereignis sein, infolge dessen ein Start der Verbrennungskraftmaschine mit hoher Wahrscheinlichkeit erfolgen kann. Vorzugsweise wird durch das Starterwartungsereignis jedoch der Start der Verbrennungskraftmaschine nicht bewirkt. Das Starterwartungsereignis unterscheidet sich daher vorzugsweise von einer Startanforderung, die einen Start der Verbrennungskraftmaschine üblicherweise zwangsläufig einleitet.

Das Starterwartungsereignis umfasst eine Anderung einer Umgebungsbedingung, insbesondere eine Änderung mindestens einer von mehreren Umgebungsbedingungen. Eine Änderung der Umgebungsbedingung kann beispielsweise vorliegen, wenn eine Ampel von rot auf gelb bzw. grün schaltet, ein voranfahrendes Fahrzeug anfährt oder beschleunigt, ein Verkehrsschild mit einer Aufforderung, Vorfahrt zu gewähren, beispielsweise ein Stoppschild, ein Verkehrsschild mit einer Aufhebung einer Geschwindigkeitsbegrenzung und/oder ein Zebrastreifen erkannt wird und/oder wenn sich eine andere Umgebungsbedingung in der Weise ändert, dass ein Start der Verbrennungskraftmaschine wahrscheinlich, beispielsweise mit einer Wahrscheinlichkeit von mindestens 70 %, bevorsteht. Die Änderung der Umgebungsbedingung kann durch externe Signale, beispielsweise Car2x-Signale, zur Verfügung gestellt werden.

Alternativ oder zusätzlich kann das Starterwartungsereignis eine Änderung eines Zustands der Antriebsvorrichtung, bei der die Verbrennungskraftmaschine abgeschaltet bleibt, umfassen. Eine Änderung des Zustands der Antriebsvorrichtung kann vorliegen, wenn eine Kupplung betätigt wird, um eine Motor-Start-Stopp-Automatik zu deaktivieren, wenn ein vorgegebener Schalter zum Vorkonditionieren der Verbrennungskraftmaschine aktiviert wird oder wenn der Zustand der Antriebsvorrichtung in einer Weise geändert wird, dass ein Start der Verbrennungskraftmaschine wahrscheinlich bevorsteht. Die Änderung des Zustands der Antriebsvorrichtung kann durch fahrzeugimmanente Signale zur Verfügung gestellt werden.

Die aktiv steuerbare Verdichtungskomponente wirkt bevorzugt druckerzeugend. Beispielsweise kann die aktiv steuerbare Verdichtungskomponente elektrisch betrieben werden. Eine elektrische Aufladung zeichnet sich durch ihre Unabhängigkeit von der nicht vorhandenen Abgasenthalpie bei abgeschalteter Verbrennungskraftmaschine aus. Die elektrisch betriebene Verdichtungskomponente kann schon vor einer Momentenanforderung, beispielsweise durch den Fahrer, zu einer Vorkonditionierung des Ladedrucks beitragen, indem sie direkt vor der Lastanforderung aktiv angesteuert wird.

In manchen Ausführungsbeispielen kann die Verdichtungskomponente einen elektrischen Zusatzverdichter umfassen, der beispielsweise in dem Luftzuführkanal angeordnet ist. Alternativ oder zusätzlich kann die Verdichtungskomponente einen Abgasturbolader umfassen, der einen externen Elektroantrieb aufweist.

Es besteht die Möglichkeit, dass die Antriebsvorrichtung mehrere gleichartige oder unterschiedliche Verdichtungskomponenten enthält, die jeweils vor dem Start der Verbrennungskraftmaschine aktiviert werden, um den Ladedruck bei abgeschalteter Verbrennungskraftmaschine zu erhöhen.

In manchen Ausführungsbeispielen kann das Leiten des Massenstroms durch den Abschnitt des Luftzuführkanals das Öffnen eines Einlassventils und eines Auslassventils der Verbrennungskraftmaschine umfassen. Alternativ oder zusätzlich kann das Leiten des Massenstroms durch den Abschnitt des Luftzuführkanals das Öffnen eines Bypasses, beispielsweise eines Ventils in dem Bypass, der Verbrennungskraftmaschine umfassen, der den Luftzuführkanal mit einem Abgaskanal zum Abführen von Abgas aus der Verbrennungskraftmaschine verbindet. Der Bypass ist vorzugsweise der Hochdruckabgasrückführkanal und das Ventil ist vorzugsweise das Hochdruck-Abgasrückführventil. Das Öffnen des Einlassventils und des Auslassventils der Verbrennungskraftmaschine bzw. das Öffnen des Ventils in dem Bypass kann unter Ausnutzung vorhandener Stellglieder (Steller) erfolgen.
Der Abschnitt des Luftzuführkanals, durch den der Massenstrom geleitet wird, kann einen Teilbereich des Luftzuführkanals oder den gesamten Luftzuführkanal umfassen. Er kann von der Art der Verdichtungskomponente und/oder der Stellung von Einlassventil, Auslassventil und/oder Bypassventil (Ventil im Bypass) abhängen.

In manchen Ausführungsbeispielen kann die Verdichtungskomponente ein Zusatzverdichter sein, der in dem Luftzuführkanal angeordnet ist, und ein Zusatzverdichterbypass vorgesehen sein, der einen Bereich des Luftzuführkanals in Strömungsrichtung vor dem Zusatzverdichter mit einem Bereich des Luftzuführkanals in Strömungsrichtung nach dem Zusatzverdichter verbindet. Zum Leiten des Massenstroms durch den Abschnitt des Luftzuführkanals kann dann der Zusatzverdichterbypass, insbesondere ein Ventil in dem Zusatzverdichterbypass, geöffnet werden. Der Abschnitt des Luftzuführkanals, durch den der Massenstrom geleitet wird, kann hier einen Bereich um den Zusatzverdichter zwischen einem Ein- und Ausgang des Zusatzverdichterbypasses sein. Der Massenstrom kann so im Kreis geleitet werden, was für einen Wiederstart der Verbrennungskraftmaschine vorteilhaft sein kann.

In manchen Ausführungsbeispielen des Verfahrens zum Betreiben der Antriebsvorrichtung kann, wenn ein Starterwartungsereignis vorliegt, weiterhin ermittelt werden, ob ein Start der abgeschalteten Verbrennungskraftmaschine angefordert wird. Beispielsweise kann eine Startanforderung erkannt werden. Die Startanforderung kann beispielsweise eine Betätigung der Zündung und/oder eines Gaspedals oder eines Gashebels durch den Fahrer enthalten. Wenn der Start der abgeschalteten Verbrennungskraftmaschine angefordert wird, kann die abgeschaltete Verbrennungskraftmaschine gestartet werden. Nach dem Start kann die Verbrennungskraftmaschine dann ein Moment liefern.

In manchen Ausführungsbeispielen kann die Verdichtungskomponente, wenn der Start der abgeschalteten Verbrennungskraftmaschine nicht innerhalb einer vorgegebenen Zeitspanne nach dem Starterwartungsereignis angefordert wird, deaktiviert werden. Die vorgegebene Zeitspanne kann im Sekundenbereich, beispielsweise im Bereich von 0,1 s bis 60 s liegen und kann gegebenenfalls von dem Starterwartungsereignis abhängen. Beispielsweise kann die vorgegebene Zeitspanne ca. 3 Sekunden betragen, wenn erkannt wird, dass ein voranfahrendes Fahrzeug beschleunigt, ca. 5 Sekunden betragen, wenn erkannt wird, dass eine Ampel von rot auf grün schaltet und ca. 20 Sekunden betragen, wenn ein Stoppschild erkannt wird. Die Zeitangaben sind nicht auf die genannten Angaben beschränkt und können beliebig angepasst werden.

Außerdem kann die Verdichtungskomponente vor Ablauf der vorgegebenen Zeitspanne deaktiviert werden. Dies kann beispielsweise erforderlich sein, um den Energiespeicher vor übermäßigen Belastungen zu schützen.

In manchen Ausführungsbeispielen kann die Verdichtungskomponente deaktiviert werden, sobald nach dem Starten der abgeschalteten Verbrennungskraftmaschine ein Deaktivierungskriterium erfüllt ist. Beispielsweise kann die Verdichtungskomponente deaktiviert werden, wenn nach dem Start der Verbrennungskraftmaschine ein Soll-Ladedruck erreicht ist oder wenn die zur Verfügung stehende insbesondere elektrische Energie für andere Anwendungen verbraucht wird.

In manchen Ausführungsbeispielen des Verfahrens zum Betreiben der Antriebsvorrichtung kann, wenn ein Starterwartungsereignis vorliegt, eine variable Turbinengeometrie (VTG) des Abgasturboladers und/oder ein Ventil in einem Turbinenbypass (Wastegate) eingestellt werden. Beispielsweise kann die VTG und/oder der Turbinenbypass geöffnet werden, um einen Strömungswiderstand zu reduzieren. Es kann aber auch vorteilhaft sein, die VTG und/oder den Turbinenbypass (Wastegate) zu schließen, um ein Ansprechverhalten des Abgasturboladers zu optimieren.

In manchen Ausführungsbeispielen des Verfahrens zum Betreiben der Antriebsvorrichtung kann, wenn ein Starterwartungsereignis vorliegt, eine Abgasklappe im Abgaskanal und/oder ein Ventil in einem Niederdruckbypass, der einen Bereich des Luftzuführkanals in Strömungsrichtung vor einem Verdichter eines Abgasturboladers mit einem Bereich eines Abgaskanals in Strömungsrichtung nach einer Turbine des Abgasturboladers verbindet, vorzugsweise in dem Niederdruckabgasrückführkanal, eingestellt werden. Beispielsweise kann die Abgasklappe geöffnet werden, um den Strömungswiderstand zu minimieren. Alternativ oder zusätzlich kann der Niederdruckbypass, insbesondere das Ventil in dem Niederdruckbypass, geöffnet werden, um den Strömungswiderstand zu minimieren. Der Niederdruckbypass ist vorzugsweise der Niederdruckabgasrückführkanal und das Ventil ist vorzugsweise das Abgasrückführventil in dem Niederdruckrückführkanal. Wenn das Ventil in dem Niederdruckbypass geöffnet wird, kann die Abgasklappe geschlossen bleiben oder geschlossen werden, damit das Gas im Kreis gefördert wird. Eine solche Förderung des Gases im Kreis bietet insbesondere bei Motor-Start-Stopp während der Fahrt (Segeln mit ausgeschaltetem Verbrennungsmotor) eine Verbesserung der Anfahrperformance.

Die vorliegende Erfindung betrifft weiterhin eine Steuervorrichtung zum Betreiben einer Antriebsvorrichtung mit einer Verbrennungskraftmaschine, einem Luftzuführkanal zum Zuführen von Luft zur Verbrennungskraftmaschine und einer aktiv steuerbaren Verdichtungskomponente zum Beeinflussen eines Drucks im Luftzuführkanal. Die Steuervorrichtung ist dazu ausgebildet, das in den voranstehenden Abschnitten beschriebene Verfahren zum Betreiben der Antriebsvorrichtung auszuführen.

Die Steuervorrichtung kann einen Prozessor, beispielsweise einen Mikroprozessor, aufweisen, der dazu ausgebildet ist, das beschriebene Verfahren zum Betreiben der Antriebsvorrichtung auszuführen. Die Steuervorrichtung kann weiterhin einen Datenspeicher aufweisen, in dem vorzugsweise ein Programm hinterlegt ist, das Anweisungen für den Prozessor enthält, um diesen entsprechend dem beschriebenen Verfahren zu steuern. In dem Datenspeicher können zudem mögliche Starterwartungsereignisse und gegebenenfalls zugehörige vorgegebenen Zeitspannen für die Deaktivierung der Verdichtungskomponente hinterlegt sein.

Die Steuervorrichtung kann eine Reihe von Signaleingängen und Signalausgängen aufweisen. Über die Signaleingänge können beispielsweise Signale empfangen werden, die die aktuell erkannten Starterwartungsereignisse enthalten. Über die Signalausgänge können verschiedene Absperrorgane der Antriebsvorrichtung, beispielsweise Einlass- und Auslassventile und/oder Ventile in verschiedenen Bypässen, sowie die aktiv steuerbare Verdichtungskomponente gesteuert werden.

Über die Signaleingänge kann auch ein aktueller Ladedruck und/oder ein aktuelles Moment der Verbrennungskraftmaschine zur Verfügung gestellt werden. Auf Grundlage des aktuellen Ladedrucks und/oder des aktuellen Moments kann der Prozessor entscheiden, ob die Verdichtungskomponente nach dem Start der Verbrennungskraftmaschine deaktiviert werden soll.

Die Steuervorrichtung kann in eine Motorsteuerung der Antriebsvorrichtung integriert sein.

Die erfindungsgemäße Steuervorrichtung kann in einer Antriebsvorrichtung eines Fahrzeugs, die weiterhin eine Verbrennungskraftmaschine, einen Luftzuführkanal zum Zuführen von Luft zur Verbrennungskraftmaschine und eine aktiv steuerbare Verdichtungskomponente zum Beeinflussen eines Drucks im Luftzuführkanal umfasst, enthalten sein. Die Steuervorrichtung ist dazu ausgebildet, das oben beschriebene Verfahren zum Betreiben einer Antriebsvorrichtung auszuführen. Die Verbrennungskraftmaschine kann ein Ottomotor oder eine DieselBrennkraftmaschine sein.

Ausführungsbeispiele der Erfindung werden nun beispielhaft und unter Bezugnahme auf die beigefügten Zeichnungen beschrieben. Es zeigen:
- Fig. 1: schematisch ein Ausführungsbeispiel einer Antriebsvorrichtung mit einer Steuervorrichtung gemäß der Erfindung;
- Fig. 2: ein Flussdiagramm eines Verfahrens zum Betreiben der in Fig. 1 gezeigten Antriebsvorrichtung gemäß der Erfindung;
- Fig. 3: eine Auflistung möglicher Einstellungsvarianten der Ventile;
- Fig. 4: eine schematische Darstellung eines Ladedruckverlaufs vor und beim Start der Verbrennungskraftmaschine; und
- Fig. 5: eine schematische Darstellung eines Momentenverlaufs vor und beim Start der Verbrennungskraftmaschine.

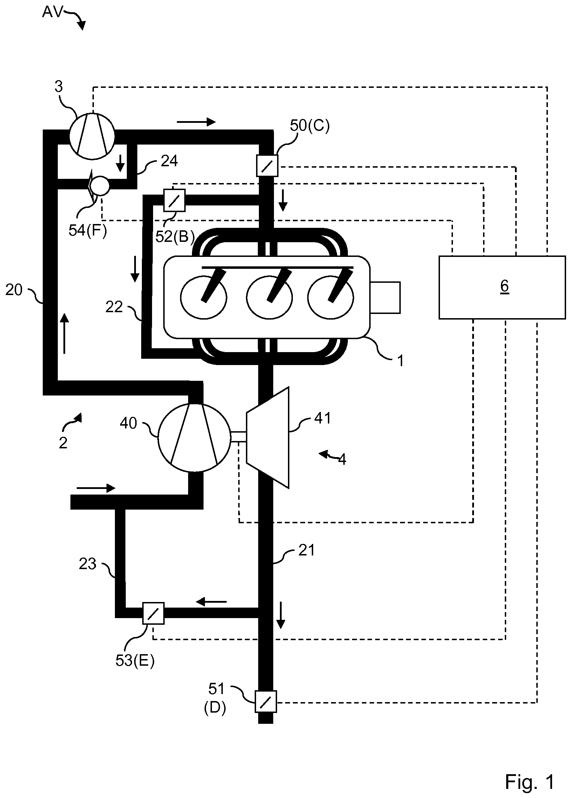

Fig. 1 zeigt einen schematischen Aufbau einer Antriebsvorrichtung AV. Die Antriebsvorrichtung AV umfasst eine Verbrennungskraftmaschine in Form eines Verbrennungsmotors 1, ein Kanalsystem 2 mit einem Luftzuführkanal 20, einen elektrisch betreibbaren Zusatzverdichter 3, einen Abgasturbolader 4, einige Absperrorgane und eine Steuervorrichtung 6.

Der Verbrennungsmotor 1 ist in dem Kanalsystem 2 zwischen dem Luftzuführkanal und einem Abgaskanal 21 angeordnet. Der Verbrennungsmotor 1 umfasst mehrere Zylinder, in denen sich Kolben bewegen und die über Einlassventile (nicht dargestellt) mit dem Luftzuführkanal 20 und über Auslassventile (nicht dargestellt) mit dem Abgaskanal 21 verbunden sind. Die Einlass- und Auslassventile sind mit Hilfe der Steuervorrichtung 6 steuerbar. Der Verbrennungsmotor 1 dient der Erzeugung eines Moments.

Der Zusatzverdichter 3 ist in dem Luftzuführkanal 20 in Strömungsrichtung vor dem Verbrennungsmotor 1 angeordnet. Der Zusatzverdichter 3 ist dazu ausgebildet, einen Ladedruck in dem Luftzuführkanal 20 oder in einem Abschnitt des Luftzuführkanals 20 zu erzeugen. Der Zusatzverdichter 3 ist mit der Steuervorrichtung 6 steuerbar.

Der Abgasturbolader 4 umfasst einen Verdichter 40 und eine Abgasturbine 41 mit VTG. Der Verdichter 40 ist in dem Luftzuführkanal 20 in Strömungsrichtung vor dem Zusatzverdichter 3 angeordnet. Die Abgasturbine 41 ist in dem Abgaskanal 21 in Strömungsrichtung nach dem Verbrennungsmotor 1 angeordnet. Durch die Abgasenthalpie wird die Abgasturbine 41 in Bewegung versetzt. Dadurch wird auch der Verdichter 40 angetrieben und es entstehen ein Massenstrom und ein Ladedruck. Da nur bei arbeitendem Verbrennungsmotor 1 eine Abgasenthalpie vorhanden ist, kann der Ladedruck beim Start des Verbrennungsmotors 1 durch den Abgasturbolader 4 nur sehr träge aufgebaut werden. Daher ist unterstützend der Zusatzverdichter 3 vorgesehen, wie weiter unten im Detail ausgeführt wird.

Das Kanalsystem 2 umfasst den Luftzuführkanal 20, den Abgaskanal 21, einen Bypasskanal 22, einen Niederdruckbypasskanal 23 und einen Zusatzverdichterbypasskanal 24. Seitlich der Kanäle 20 bis 24 sind Pfeile dargestellt, die den Massenstrom bei einer Vorladung andeuten. Der Luftzuführkanal 20 ist in Strömungsrichtung des Massenstroms (angegeben durch Pfeile) vor dem Verbrennungsmotor 1 angeordnet und ist dazu vorgesehen, Luft in den Verbrennungsmotor 1 zu führen. In dem Luftzuführkanal 20 ist eine Drosselklappe 50 angeordnet, wobei die Drosselklappe 50 in Strömungsrichtung nach dem Zusatzverdichter 3 angeordnet ist. Der Abgaskanal 21 ist in Strömungsrichtung des Massenstroms (angegeben durch Pfeile) nach dem Verbrennungsmotor 1 angeordnet und ist dazu vorgesehen, Luft aus dem Verbrennungsmotor 1 zu führen. In dem Abgaskanal 21 sind in Strömungsrichtung nach der Abgasturbine 41 des Abgasturboladers 4 eine Vorrichtung (nicht dargestellt) zur Abgasnachbehandlung und eine Abgasklappe 51 angeordnet. Der Bypasskanal 22 verbindet den Luftzuführkanal 20 in Strömungsrichtung nach der Drosselklappe 50 mit dem Abgaskanal 21 in Strömungsrichtung vor der Abgasturbine 41 des Abgasturboladers 4. In dem Bypasskanal 22 ist ein Bypassventil 52, das als Standard-AGR-Ventil ausgebildet ist, angeordnet, um in Abhängigkeit der Stellung des Bypassventils 52 einen Massenstrom durch den Bypasskanal zuzulassen oder zu unterbrechen. Der Niederdruckbypasskanal 23 verbindet den Luftzuführkanal 20 in Strömungsrichtung vor dem Zusatzverdichter 3 und vor dem Verdichter 40 des Abgasturboladers mit dem Abgaskanal 21 zwischen der Vorrichtung zur Abgasnachbehandlung und der Abgasklappe 51. In dem Niederdruckbypasskanal 23 ist ein Niederdruckbypassventil 53, das als Standard-AGR-Ventil ausgebildet ist, angeordnet, um in Abhängigkeit der Stellung des Niederdruckbypassventils 53 einen Massenstrom durch den Bypasskanal zuzulassen oder zu unterbrechen Der Zusatzverdichterbypasskanal 24 verbindet einen Bereich des Luftzuführkanals 20 zwischen dem Verdichter 40 des Abgasturboladers 4 und dem Zusatzverdichter 3 mit einem Bereich des Luftzuführkanals 20 zwischen dem Zusatzverdichter 3 und der Drosselklappe 50.

Die Absperrorgane umfassen neben den Einlass- und Auslassventilen des Verbrennungsmotors 1, der Drosselklappe 50, der Abgasklappe 51, dem Bypassventil 52, das in dem Bypasskanal 22 angeordnet ist, und das Niederdruckbypassventil 53, das in dem Niederdruckbypasskanal 23 angeordnet ist, ein Zusatzverdichterbypassventil 54, das in dem Zusatzverdichterbypasskanal 24 angeordnet ist.

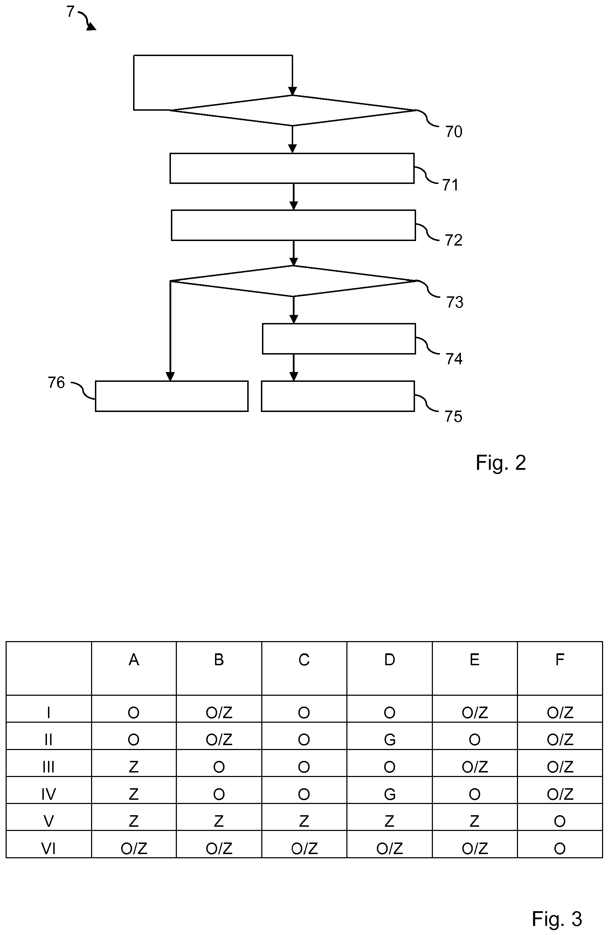

Die Steuervorrichtung 6 umfasst einen Prozessor, der dazu ausgebildet, ein Verfahren 7 zum Betreiben der Antriebsvorrichtung AV auszuführen, wie es nachfolgend mit Bezug auf Fig. 2 beschrieben wird. Die Steuervorrichtung 6 ist dazu mit dem Zusatzverdichter 3, dem Abgasturbolader 4 und den Absperrorganen verbunden, wie durch die gestrichelten Linien dargestellt.

Fig. 2 zeigt ein Flussdiagramm eines Verfahrens 7 zum Betreiben der Antriebsvorrichtung aus Fig. 1. Der Verbrennungsmotor 1 ist zu Beginn des Verfahrens 7 abgeschaltet.

Bei 70 wird bei abgeschaltetem Verbrennungsmotor ermittelt, ob ein Starterwartungsereignis vorliegt, infolge dessen ein Start des Verbrennungsmotors erfolgen kann. Dazu empfängt die Steuervorrichtung 6 beispielsweise Bilder von einer Kamera, die den Straßenverkehr überwacht. Die Steuervorrichtung wertet die Bilder aus und prüft, ob ein Start des Verbrennungsmotors wahrscheinlich erfolgt. Zusätzlich empfängt die Steuervorrichtung 6 Signale von Sensoren wie einem Kupplungssensor, wertet die Signale aus und prüft, ob ein Start des Verbrennungsmotors wahrscheinlich erfolgt.

Bei 71 wird, wenn ein Starterwartungsereignis vorliegt, ein Massenstrom durch einen Bereich des Luftzuführkanals geleitet, bevor der abgeschaltete Verbrennungsmotor gestartet wird. Dazu steuert die Steuervorrichtung die Einstellung der Absperrorgane und eines Stellers des Abgasturboladers in geeigneter Weise. Beispielhafte Einstellungen der Absperrorgane werden weiter unten mit Bezug auf Fig. 3 im Detail beschrieben.

Bei 72 wird der Zusatzverdichter aktiviert. Dazu steuert die Steuervorrichtung den Zusatzverdichter entsprechend an. Die Aktivierung erfolgt, bevor der abgeschaltete Verbrennungsmotor gestartet wird. Dadurch wird bereits vor dem Start des Verbrennungsmotors ein Ladedruck zur Verfügung gestellt und ein Zielladedruck kann nach dem Start schneller erzeugt werden als ohne die Vorkonditionierung durch den Zusatzverdichter.

Der Zusatzverdichter kann aktiviert werden, bevor oder nachdem der Massenstrom durch den Bereich des Luftzuführkanals geleitet wird. Alternativ kann das Leiten des Massenstroms durch den Bereich des Luftzuführkanals und das Aktivieren des Zusatzversdichters auch gleichzeitig erfolgen.

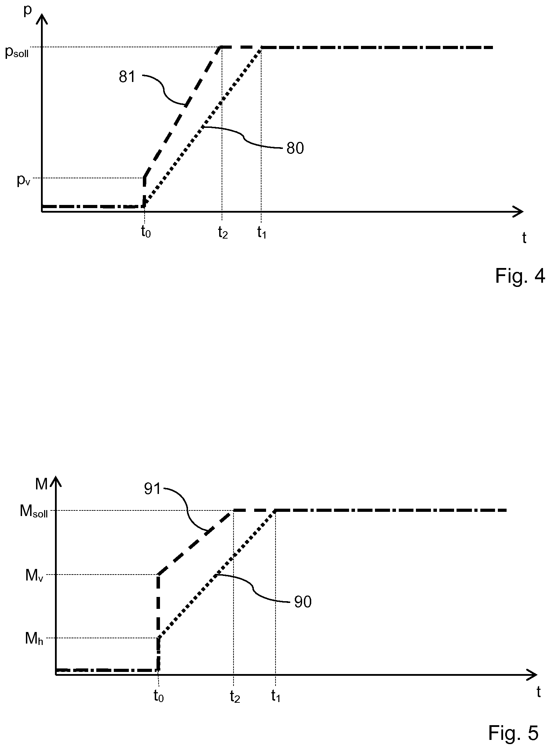

Fig. 4 zeigt schematisch einen Verlauf des Ladedrucks vor, während und nach dem Start des Verbrennungsmotors 1 für eine herkömmliche Antriebsvorrichtung ohne Vorkonditionierung durch den Zusatzverdichter (Ladedruckverlauf 80) und für die oben mit Bezug auf Fig. 1 beschriebene Antriebsvorrichtung AV (Ladedruckverlauf 81). Für eine herkömmliche Antriebsvorrichtung mit dem Ladedruckverlauf 80 entspricht der Ladedruck bis zum Startzeitpunkt t₀ einem Umgebungsdruck. Vom Startzeitpunkt to an, bei dem der Verbrennungsmotor gestartet wird, steigt der Ladedruck an, bis sich zum Zeitpunkt t₁ ein gewünschter Ladedruck (Soll-Ladedruck) pₛₒₗₗ einstellt. Im Gegensatz dazu steigt der Ladedruck der Antriebsvorrichtung AV mit dem Ladedruckverlauf 81 spätestens zum Startzeitpunkt t₀ aufgrund des Massenstroms durch den Luftzuführkanal und der Aktivierung des Zusatzverdichters sehr schnell von dem Umgebungsdruck auf einen Ladedruck p_{V} an. Vom Startzeitpunkt to steigt der Ladedruck schneller als bei der herkömmlichen Antriebsvorrichtung an und erreicht bereits bei einem Zeitpunkt t₂, der früher als der Zeitpunkt t₁ liegt, den gewünschten Ladedruck pₛₒₗₗ.

Fig. 5 zeigt schematisch einen Verlauf des von dem Verbrennungsmotor bereitgestellten Ist-Moments vor, während und nach dem Start des Verbrennungsmotors 1 für eine herkömmliche Antriebsvorrichtung ohne Vorkonditionierung durch den Zusatzverdichter 3 (Momentenverlauf 90) und für die oben mit Bezug auf Fig. 1 beschriebene Antriebsvorrichtung AV (Momentenverlauf 91). Für die herkömmliche Antriebsvorrichtung mit dem Momentenverlauf 90 beträgt das Moment zum Startzeitpunkt t₀ einen Wert Mₕ. Vom Startzeitpunkt t₀ an, bei dem der Verbrennungsmotor gestartet wird, steigt das Moment an, bis zum Zeitpunkt t₁ ein gewünschtes Moment (Sollmoment) Mₛₒₗₗ erreicht ist. Im Gegensatz dazu steigt das Moment der Antriebsvorrichtung AV mit dem Ladedruckverlauf 81 spätestens zum Startzeitpunkt t₀ aufgrund des Massenstroms durch den Luftzuführkanal und der Aktivierung des Zusatzverdichters sehr schnell von dem Moment Mₕ auf einen höheren Wert Mᵥ (Mₕ<Mᵥ) an. Vom Startzeitpunkt to steigt das Moment schneller als bei der herkömmlichen Antriebsvorrichtung an und erreicht bereits bei einem Zeitpunkt t₂, der früher als der Zeitpunkt t₁ liegt, das gewünschte Moment Mₛₒₗₗ.

Bei 73 in Fig. 2 wird, wenn ein Starterwartungsereignis vorliegt, ermittelt, ob ein Start des abgeschalteten Verbrennungsmotors angefordert wird. Dazu werden beispielsweise Signale eines Sensors eines Gaspedals empfangen und ausgewertet, ob das Gaspedal gedrückt wird. Der Start des abgeschalteten Verbrennungsmotors wird angefordert, wenn das Gaspedal gedrückt wird.

Bei 74 wird, wenn der Start der abgeschalteten Verbrennungskraftmaschine angefordert wird, der abgeschaltete Verbrennungsmotor gestartet. Nachdem der Verbrennungsmotor gestartet ist, kann dieser in einer Weise betrieben werden, wie sie beispielsweise für herkömmliche Verbrennungsmotoren bekannt ist.

Bei 75 wird, sobald nach dem Starten der abgeschalteten Verbrennungskraftmaschine ein Deaktivierungskriterium erfüllt ist, der Zusatzverdichter deaktiviert. Das Deaktivierungskriterium kann sein, dass ein konstanter Ladedruck pₖ herrscht, der allein aufgrund der Abgasenthalpie durch den Abgasturbolader aufrechterhalten werden kann.

Bei 76 wird, wenn der Start der abgeschalteten Verbrennungskraftmaschine nicht innerhalb einer vorgegebenen Zeitspanne nach dem Starterwartungsereignis angefordert wird, der Zusatzverdichter wieder deaktiviert. Die Zeitspanne richtet sich nach dem Starterwartungsereignis und beträgt einige Sekunden.

Das Verfahren zum Betreiben der Antriebsvorrichtung kann nach jedem Motorstopp wiederholt werden.

Fig. 3 zeigt eine Tabelle mit beispielhaften Einstellungsvarianten der Absperrorgane 50 bis 54 der in Fig. 1 dargestellten Antriebsvorrichtung AV. In der ersten Spalte werden die Einstellungsvarianten mit römischen Ziffern nummeriert. In der ersten Zeile werden die Absperrorgane aufgelistet, wobei A die Ein- und Auslassventile bezeichnet, B das Bypassventil 52, C die Drosselklappe 50, D die Abgasklappe 51, E das Niederdruckbypassventil 53 und F das Zusatzverdichterbypassventil 54.

In den Einstellungsvarianten I und II sind die Einlass- und Auslassventile A geöffnet (O). Das Bypassventil B und, wenn vorhanden, das Zusatzverdichterbypassventil F sind jeweils wahlweise geöffnet (O) oder geschlossen (Z). In Einstellvariante I ist die Abgasklappe D geöffnet (O) und das Niederdruckbypassventil E ist geöffnet oder geschlossen. In der Einstellvariante II ist die Abgasklappe C geschlossen (Z) und das Niederdruckbypassventil E ist geöffnet (O).

In den Einstellungsvarianten III und IV ist das Bypassventil geöffnet (O). Die Einlass- und Auslassventile A sind geschlossen (Z) und das Zusatzverdichterbypassventil F ist, wenn vorhanden, wahlweise geöffnet (O) oder geschlossen (Z). In Einstellvariante III ist die Abgasklappe D geöffnet (O) und das Niederdruckbypassventil E ist geöffnet (O) oder geschlossen (Z). In der Einstellvariante IV ist die Abgasklappe C geschlossen (Z) und das Niederdruckbypassventil E ist geöffnet (O).

Die Drosselklappe C ist in den Einstellungsvarianten I bis IV jeweils geöffnet (O).

In den Einstellungsvarianten V und VI ist das Zusatzverdichterbypassventil F vorgesehen, das geöffnet (O) ist. In der Einstellungsvariante V sind alle anderen Ventile geschlossen und der Massenstrom wird im Kreis geleitet. In der Einstellungsvariante VI sind die anderen Ventile jeweils wahlweise geöffnet (O) oder geschlossen (Z).

Es können auch andere Einstellvarianten möglich sein, sofern sie einen Massenstrom durch den Luftzuführkanal zulassen. Eine der Einstellvarianten kann vorab ausgewählt sein und nach jedem Starterwartungsereignis entsprechend eingestellt werden. Alternativ können abhängig vom Starterwartungsereignis und/oder dem Zustand der Antriebsvorrichtung unterschiedliche Einstellvarianten nach jedem Starterwartungsereignis aktiv ausgewählt werden.

Zusätzlich wird beim Leiten des Massenstroms durch den Luftzuführkanal die VTG und/oder ein Turbinenbypassventil in einem Wastegate (nicht dargestellt) eingestellt, um den Strömungswiderstand zu reduzieren (VTG und/oder Turbinenbypassventil geöffnet) oder um ein Ansprechverhalten des Abgasturboladers zu optimieren (VTG und/oder Turbinennypassventil geschlossen).

### Bezugszeichenliste

- 1: Verbrennungsmotor
- 2: Kanalsystem
- 20: Luftzuführkanal
- 21: Abgaskanal
- 22: Bypasskanal
- 23: Niederdruckbypasskanal
- 24: Zusatzverdichterbypasskanal
- 3: Zusatzverdichter
- 4: Abgasturbolader
- 40: Verdichter
- 41: Abgasturbine
- 50: Drosselklappe
- 51: Abgasklappe
- 52: Bypassventil
- 53: Niederdruckbypassventil
- 54: Zusatzverdichterbypassventil
- 6: Steuervorrichtung
- 7: Verfahren zum Betreiben einer Antriebsvorrichtung
- 70: Ermitteln, ob ein Starterwartungsereignis vorliegt
- 71: Leiten eines Massenstroms durch den Luftzuführkanal
- 72: Aktivieren des Zusatzverdichters
- 73: Ermitteln, ob ein Start des Verbrennungsmotors angefordert wird
- 74: Starten des Verbrennungsmotors
- 75: Deaktivieren des Zusatzverdichters nach dem Start des Verbrennungsmotors
- 76: Deaktivieren des Zusatzverdichters bei Ausbleiben eines Verbrennungsmotorstarts
- 80: Ladedruckverlauf beim Start einer herkömmlichen Antriebsvorrichtung
- 81: Ladedruckverlauf beim Start einer Antriebsvorrichtung mit Vorkonditionierung
- 90: Moment beim Start einer herkömmlichen Antriebsvorrichtung
- 91: Moment beim Start einer Antriebsvorrichtung mit Vorkonditionierung
- AV: Antriebsvorrichtung
- p: Ladedruck
- pᵥ, pₛₒₗₗ, pₕ: Ladedruckwerte
- t: Zeit
- t₀, t₁, t₂: Zeitpunkte
- M: Ist-Moment
- Mᵥ, Mₛₒₗₗ, Mₕ: Ist-Momentwerte
- I-IV: Einstellvarianten der Absperrorgane
- A-F: Absperrorgane
- O: Absperrorgan geöffnet
- Z: Absperrorgan geschlossen

## Patentansprüche

1. Verfahren zum Betreiben einer Antriebsvorrichtung (AV) mit einer Verbrennungskraftmaschine (1), einem Luftzuführkanal (20) zum Zuführen von Luft zur Verbrennungskraftmaschine (1) und einer aktiv steuerbaren Verdichtungskomponente (3) zum Beeinflussen eines Drucks im Luftzuführkanal (20), umfassend:
Ermitteln (70) bei abgeschalteter Verbrennungskraftmaschine (1), ob ein Starterwartungsereignis vorliegt, infolge dessen ein Start der Verbrennungskraftmaschine (1) erfolgen kann, wobei die Verbrennungskraftmaschine abgeschaltet ist, wenn eine Zündung aktiviert ist und die Verbrennungskraftmaschine kein Drehmoment liefert, und wobei das Starterwartungsereignis eine Änderung einer Umgebungsbedingung umfasst; und,
wenn ein Starterwartungsereignis vorliegt:
Leiten (71) eines Massenstroms durch einen Abschnitt des Luftzuführkanals (20), bevor ein Start der abgeschalteten Verbrennungskraftmaschine (1) angefordert wird; und
Aktivieren (72) der Verdichtungskomponente (3), bevor der Start der abgeschalteten Verbrennungskraftmaschine (1) angefordert wird.

2. Verfahren nach Anspruch 1, wobei das Leiten (71) des Massenstroms durch den Abschnitt des Luftzuführkanals (20) umfasst:
Öffnen eines Einlassventils und eines Auslassventils der Verbrennungskraftmaschine (1); und/oder
Öffnen eines Bypassventils (52) in einem Bypass (22) der Verbrennungskraftmaschine (1), der den Luftzuführkanal (20) mit einem Abgaskanal (21) zum Abführen von Abgas aus der Verbrennungskraftmaschine (1) verbindet.

3. Verfahren nach Anspruch 1 oder 2, wobei die Verdichtungskomponente (3) einen Zusatzverdichter, der in dem Luftzuführkanal angeordnet ist, und/oder einen oder mehrere Abgasturbolader, der einen externen Antrieb aufweist, umfasst.

4. Verfahren nach einem der Ansprüche 1 bis 3, wobei die Verdichtungskomponente (3) ein Zusatzverdichter ist, der in dem Luftzuführkanal (20) angeordnet ist, und das Leiten des Massenstroms durch den Abschnitt des Luftzuführkanals (20) umfasst:
Öffnen eines Zusatzverdichterbypassventils (54) eines Zusatzverdichterbypasses (24), der einen Bereich des Luftzuführkanals (20) in Strömungsrichtung vor dem Zusatzverdichter (3) mit einem Bereich des Luftzuführkanals (20) in Strömungsrichtung nach dem Zusatzverdichter (3) verbindet.

5. Verfahren nach einem der Ansprüche 1 bis 4, wobei das Verfahren weiter umfasst:
Ermitteln (73), wenn ein Starterwartungsereignis vorliegt, ob ein Start der abgeschalteten Verbrennungskraftmaschine (1) angefordert wird; und
Starten (74) der abgeschalteten Verbrennungskraftmaschine (1), wenn der Start der abgeschalteten Verbrennungskraftmaschine (1) angefordert wird.

6. Verfahren nach Anspruch 5, wobei das Verfahren weiter umfasst:
Deaktivieren (76) der Verdichtungskomponente (3), wenn der Start der abgeschalteten Verbrennungskraftmaschine (1) nicht innerhalb einer vorgegebenen Zeitspanne nach dem Starterwartungsereignis angefordert wird.

7. Verfahren nach Anspruch 5 oder 6, wobei die Verdichtungskomponente (3) deaktiviert wird (75), sobald nach dem Starten der abgeschalteten Verbrennungskraftmaschine (1) ein Deaktivierungskriterium erfüllt ist.

8. Verfahren nach einem der Ansprüche 1 bis 7, wobei das Verfahren, wenn ein Starterwartungsereignis vorliegt, weiterhin umfasst:
Einstellen einer variablen Turbinengeometrie eines Abgasturboladers (4);
Einstellen eines Wastegates des Turboladers (4);
Einstellen einer Abgasklappe (51) im Abgaskanal (21); und/oder
Einstellen eines Niederdruckbypassventils (53) in einem Niederdruckbypass (23), wobei der Niederdruckbypass (23) einen Bereich des Luftzuführkanals (20) in Strömungsrichtung vor einem Verdichter (40) eines Abgasturboladers (4) mit einem Bereich eines Abgaskanals (21) in Strömungsrichtung nach einer Turbine (41) des Abgasturboladers (4) verbindet.

9. Steuervorrichtung (6) zum Betreiben einer Antriebsvorrichtung (AV) mit einer Verbrennungskraftmaschine (1), einem Luftzuführkanal (20) zum Zuführen von Luft zur Verbrennungskraftmaschine (1) und einer aktiv steuerbaren Verdichtungskomponente (3) zum Beeinflussen eines Drucks im Luftzuführkanal (20), wobei die Steuervorrichtung dazu ausgebildet ist, ein Verfahren (7) nach einem der Ansprüche 1 bis 8 auszuführen.

## Claims

1. Method for operating a drive device (AV) having an internal combustion engine (1), an air feed channel (20) for feeding air to the internal combustion engine (1), and an actively controllable compression component (3) for influencing a pressure in the air feed channel (20), comprising:
ascertaining (70), in the case of a shut-down internal combustion engine (1), whether a start expectation event is present as a result of which a start of the internal combustion engine (1) may occur, wherein the internal combustion engine is in a shut-down state when an ignition is active and the internal combustion engine is providing no torque, and wherein the start expectation event comprises a change in an ambient condition; and,
if a start expectation event is present:
conducting (71) a mass flow through a section of the air feed channel (20) before a start of the shut-down internal combustion engine (1) is demanded; and
activating (72) the compression component (3) before the start of the shut-down internal combustion engine (1) is demanded.

2. Method according to Claim 1, wherein the conducting (71) of the mass flow through the section of the air feed channel (20) comprises:
opening an inlet valve and an outlet valve of the internal combustion engine (1); and/or
opening a bypass valve (52) in a bypass (22) of the internal combustion engine (1), which bypass connects the air feed channel (20) to an exhaust-gas channel (21) for discharging exhaust gas from the internal combustion engine (1).

3. Method according to Claim 1 or 2, wherein the compression component (3) comprises an additional compressor, which is arranged in the air feed channel, and/or one or more exhaust-gas turbochargers, which have an external drive.

4. Method according to any of Claims 1 to 3, wherein the compression component (3) is an additional compressor which is arranged in the air feed channel (20), and the conducting of the mass flow through the section of the air feed channel (20) comprises:
opening an additional compressor bypass valve (54) of an additional compressor bypass (24) which connects a region of the air feed channel (20) upstream of the additional compressor (3) in a flow direction to a region of the air feed channel (20) downstream of the additional compressor (3) in the flow direction.

5. Method according to any of Claims 1 to 4, wherein the method furthermore comprises:
ascertaining (73), if a start expectation event is present, whether a start of the shut-down internal combustion engine (1) is demanded; and
starting (74) the shut-down internal combustion engine (1) if the start of the shut-down internal combustion engine (1) is demanded.

6. Method according to 5, wherein the method furthermore comprises:
deactivating (76) the compression component (3) if the start of the shut-down internal combustion engine (1) is not demanded within a specified period of time after the start expectation event.

7. Method according to Claim 5 or 6, wherein the compression component (3) is deactivated (75) as soon as a deactivation criterion is satisfied after the starting of the shut-down internal combustion engine (1).

8. Method according to any of Claims 1 to 7, wherein the method, if a start expectation event is present, furthermore comprises:
adjusting a variable turbine geometry of an exhaust-gas turbocharger (4);
adjusting a wastegate of the turbocharger (4);
adjusting an exhaust-gas flap (51) in the exhaust-gas channel (21); and/or
adjusting a low-pressure bypass valve (53) in a low-pressure bypass (23),
wherein the low-pressure bypass (23) connects a region of the air feed channel (20) upstream of a compressor (40) of an exhaust-gas turbocharger (4) in a flow direction to a region of an exhaust-gas channel (21) downstream of a turbine (41) of the exhaust-gas turbocharger (4) in the flow direction.

9. Control device (6) for operating a drive device (AV) having an internal combustion engine (1), an air feed channel (20) for feeding air to the internal combustion engine (1), and an actively controllable compression component (3) for influencing a pressure in the air feed channel (20), wherein the control device is designed to carry out a method (7) according to any of Claims 1 to 8.

## Revendications

1. Procédé de fonctionnement d'un dispositif d'entraînement (AV) comprenant un moteur à combustion interne (1), un conduit d'alimentation en air (20) destiné à amener de l'air au moteur à combustion interne (1) et un composant de compression (3) commandable activement et destiné à influer sur une pression dans le conduit d'alimentation en air (20), le procédé comprenant les étapes suivantes :
déterminer (70), lorsque le moteur à combustion interne (1) est éteint, s'il y a un événement d'attente de démarrage à la suite duquel un démarrage du moteur à combustion interne (1) peut être effectué, le moteur à combustion interne étant arrêté lorsque l'allumage est activé et que le moteur à combustion interne ne délivre pas de couple, et l'événement d'attente de démarrage comprenant une variation d'une condition environnementale ; et,
s'il y a un événement d'attente de démarrage :
faire passer (71) un débit massique à travers une portion du conduit d'alimentation en air (20) avant qu'un démarrage du moteur à combustion interne arrêté (1) ne soit demandé ; et
activer (72) le composant de compression (3) avant que l'arrêt du moteur à combustion interne (1) ne soit demandé.

2. Procédé selon la revendication 1, le processus visant à faire passer (71) le débit massique à travers la portion du conduit d'alimentation en air (20) comprenant les étapes suivantes :
ouvrir une soupape d'admission et une soupape de sortie du moteur à combustion interne (1) ; et/ou
ouvrir une soupape de dérivation (52) dans une dérivation (22) du moteur à combustion interne (1), laquelle relie le conduit d'alimentation en air (20) à un conduit de gaz d'échappement (21) destiné à évacuer les gaz d'échappement du moteur à combustion interne (1) .

3. Procédé selon la revendication 1 ou 2, le composant de compression (3) comprenant un compresseur supplémentaire qui est disposé dans le conduit d'alimentation en air et/ou un ou plusieurs turbocompresseurs à gaz d'échappement qui comportent un entraînement externe.

4. Procédé selon l'une des revendications 1 à 3, le composant de compression (3) étant un compresseur supplémentaire qui est disposé dans le conduit d'alimentation en air (20) et le processus visant à faire passer le débit massique à travers la portion du conduit d'alimentation en air (20) comprenant les étapes suivantes :
ouvrir une soupape de dérivation de compresseur supplémentaire (54) d'une dérivation de compresseur supplémentaire (24), laquelle relie une zone du conduit d'alimentation en air (20) située en amont du compresseur supplémentaire (3) dans le sens d'écoulement à une zone du conduit d'alimentation en air (20) située en aval du compresseur supplémentaire (3) dans le sens de l'écoulement.

5. Procédé selon l'une des revendications 1 à 4, le procédé comprenant en outre les étapes suivantes :
déterminer (73), lorsqu'il y a un événement d'attente de démarrage, si un démarrage du moteur à combustion interne arrêté (1) est demandé ; et
démarrer (74) le moteur à combustion interne arrêté (1) lorsque le démarrage du moteur à combustion interne arrêté (1) est demandé.

6. Procédé selon la revendication 5, le procédé comprenant en outre les étapes suivantes :
désactiver (76) le composant de compression (3) lorsque le démarrage du moteur à combustion interne arrêté (1) n'est pas demandé dans un laps de temps spécifié après l'événement d'attente de démarrage.

7. Procédé selon la revendication 5 ou 6, le composant de compression (3) étant désactivé (75) dès qu'un critère de désactivation est satisfait après le démarrage du moteur à combustion interne arrêté (1).

8. Procédé selon l'une des revendications 1 à 7, lorsqu'il y a un événement d'attente de démarrage, le procédé comprenant en outre les étapes suivantes :
régler une géométrie de turbine variable d'un turbocompresseur à gaz d'échappement (4) ;
régler une vanne de purge du turbocompresseur (4) ;
régler un volet de gaz d'échappement (51) dans le conduit de gaz d'échappement (21) ; et/ou
régler une soupape de dérivation à basse pression (53) dans une dérivation à basse pression (23),
la dérivation à basse pression (23) reliant une zone du conduit d'alimentation en air (20) située en amont d'un compresseur (40) d'un turbocompresseur à gaz d'échappement (4) dans le sens d'écoulement à une zone d'un conduit de gaz d'échappement (21) située en aval d'une turbine (41) du turbocompresseur à gaz d'échappement (4) dans le sens d'écoulement.

9. Dispositif de commande (6) destiné à faire fonctionner un dispositif d'entraînement (AV) comprenant un moteur à combustion interne (1), un conduit d'alimentation en air (20) destiné à amener de l'air au moteur à combustion interne (1) et un composant de compression (3) commandable activement et destiné à influer sur une pression dans le conduit d'alimentation en air (20), le dispositif de commande étant conçu pour mettre en ouvre un procédé (7) selon l'une des revendications 1 à 8.
